# EUROPEAN PATENT APPLICATION

(11) **EP 0 861 738 A2**
(43) Date of publication of application: **02.09.1998**
(21) Application number: 98103308.7
(22) Date of filing: 25.02.1998
(51) Int. Cl.: B60B 33/00

(54) **Caster device for moving heavy objects**

(30) Priority: 27.02.1997 IT TO970036 U; 05.06.1997 IT TO970117 U
(71) Applicant: Di Nunzio, Marco, 10099 San Mauro Torinese (Torino) (IT)
(72) Inventor: Di Nunzio, Marco, 10099 San Mauro Torinese (Torino) (IT)
(74) Representative: Aprà, Mario

(57) **Abstract**

The caster device for moving heavy objects includes a plate (11) which is fixed to the underside of an object to be moved and carries a threaded pivot (12) of essentially vertical axis on which there rotates a forked swivel (13) supporting a wheel (R) mounted idly with respect to an essentially horizontal axis (Rx), while a threaded nut (16) screwed onto the threaded pivot forms, with an intermediate washer (17), the rotary connection between the parts. The rotary swivel (13) comprises a bridge (13.1) essentially parallel to the plate (11).

According to the invention, an antifriction ring means (14, 18) is interposed between the said plate (11) and the said forked swivel (13) and/or between the said forked swivel (13) and the said washer (17) so as to allow free relative rotation of the swivel with respect to the said plate and/or to the said washer about the said pivot.

## Description

The present invention relates to a caster device for moving heavy objects.

Devices of this kind are known and are fixed, e.g. in a set of three or four, underneath heavy objects that have to be moved, such as bins used for carrying objects in industrial production lines, in order to improve their mobility.

Known caster devices generally consist of a plate made from pressed sheet metal which is fixed to the underside of the object to be moved and carries a threaded pivot, also of metal, of vertical axis upon which there rotates a forked swivel, made of pressed sheet metal, supporting a wheel mounted idly with respect to a horizontal axis, while a nut screwed onto the threaded pivot forms, with an intermediate shaped washer also of pressed sheet metal, the rotary connection between the parts.

The plate and swivel, and likewise the swivel and washer, are caused to execute relative rotations about the axis of the pivot when the device is in use. In order to reduce friction, rolling-contact bearings, including arrangements of steel balls or rollers between opposing races formed in the parts are fitted between the said parts.

Known caster devices are therefore very prone to oxidation and require protective treatments of coating and/or galvanizing, adding to production costs which are already rather high because of the necessary presence of the rolling-contact bearings.

The present invention, taking as its starting point the observation of these drawbacks, seeks to provide a remedy to them.

The principal object of the present invention is therefore to provide a caster device for moving heavy objects that comprises antifriction means of simplified structure and uses fewer technical and financial resources.

Another object is to provide a device as specified that will be oxidation-free and therefore require no protective treatments of coating and/or galvanizing. A further object is to provide a device as indicated that will be structurally simple and work safely and reliably.

With these objects in view, the present invention provides a caster device for moving heavy objects, the essential characteristic of which forms the subject of Claim 1.

Further advantageous characteristics are given in the dependent claims.

The abovementioned claims are to be regarded as incorporated here in their entirety.

The present invention is described below with reference to the accompanying drawings, provided purely by way of non-restrictive example, in which:
- Fig. 1 shows, partly in view and partly in axial section, a first illustrative embodiment of the caster device according to the invention;
- Fig. 2 is a plan view in the direction of the arrow marked II in Fig. 1;
- Fig. 3 is an exploded partial view in axial section of the device shown in Fig. 1, with wheel omitted;
- Fig. 4 shows, partly in view and partly in axial section, another illustrative embodiment of the caster device according to the invention;
- Fig. 5 is an axial section of the antifriction means of the device shown in Fig. 4;
- Fig. 6 is a plan view of an alternative embodiment of the said antifriction means; and
- Fig. 7 is a sectional view on VII-VII as marked in Fig. 6.

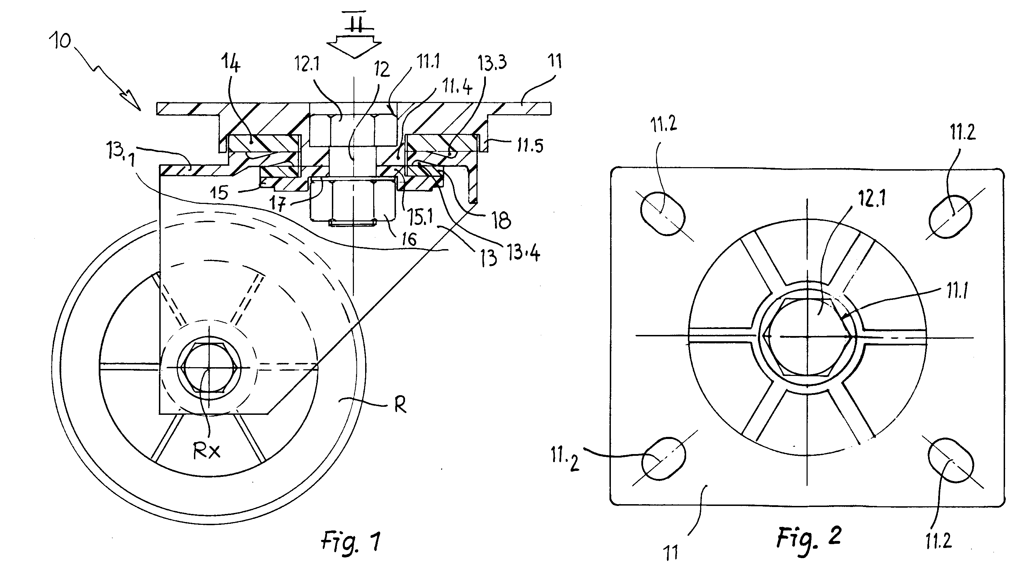

Referring first of all to Figures 1 to 3 of the drawings, 10 (Fig. 1) denotes the whole of the caster device for moving heavy objects in the said first illustrative embodiment of the present invention.

The said device 10 comprises a plate 11, which may for example be made of plastic, containing a central hole through which projects a threaded pivot 12 of essentially vertical axis and having a hexagonal head 12.1 which sits in a corresponding recess 11.1 in the plate 11.

The said plate 11, which may for example be roughly quadrilateral, contains conventional slotted holes 11.2 (Fig. 2) for screws for fixing the plate to the underside of a heavy object that is to be moved.

A forked swivel 13, which may for example be made of plastic, rotates about the said vertical pivot 12 and supports a wheel R mounted idly with respect to a horizontal axis Rx.

The said rotating swivel 13 comprises an intermediate bridge 13.1 whose top face is towards the lower face of the said plate 11.

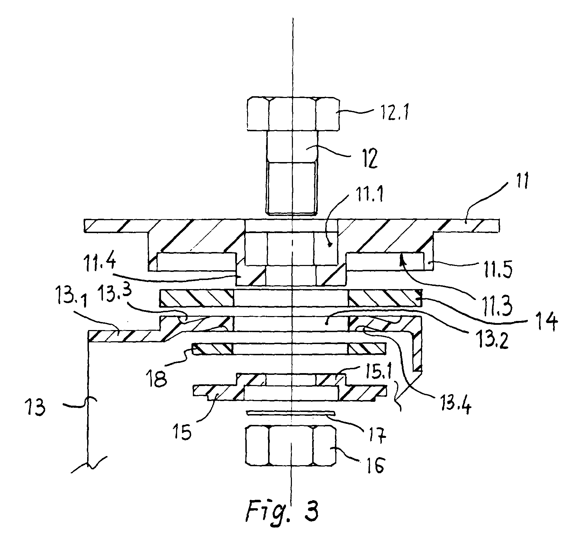

An annular seat 11.3 (Fig. 3), coaxial with respect to the pivot 12, is provided on the said lower face of the plate 11 and is bounded on the inside by an axial collar 11.4 that extends down through a corresponding hole 13.2 in the said bridge 13.1 and is itself axially traversed freely by the said pivot 12. A circumferential outer rim 11.5 bounds the said annular seat 11.3 by way of a dust guard.

The said annular seat 11.3 has an upper antifriction ring means 14, optionally of plastic, coaxial with respect to the pivot 12 and hence interposed between the said lower face of the plate 11 and the said top face of the intermediate bridge 13.1.

To reduce the area of friction between the said antifriction ring 14 and the said top face of the bridge 13.1, an annular groove 13.3 coaxial with respect to the pivot 12 is formed in the said face underneath the ring 14.

An annular assembly disc 15, optionally of plastic, is fitted coaxially onto the free end of the pivot 12 and bears from beneath, via an axial projection 15.1 with which it is provided - and through which the said pivot 12 freely passes axially - against the said axial collar 11.4 of the plate 11. The said annular disc 15 is squeezed in this position against the said axial collar 11.4 by a threaded nut 16, optionally of plastic, which is screwed onto the said free end of the pivot 12. 17 denotes an elastic washer, optionally of plastic, inserted coaxially between the nut 16 and the disc 15.

A lower antifriction ring means 18, optionally of plastic, is supported coaxially by the said annular disc 15, around the projection 15.1 of which it is axially fitted, so as to be inserted between the lower face of the bridge 13.1 and the top face of the disc 15.

To reduce the area of friction an annular groove 13.4 coaxial with respect to the pivot 12 is provided in the said lower face of the bridge 13.1, over the antifriction ring 18.

By means of this arrangement, the said bridge 13.1 is sandwiched between two antifriction rings, an upper ring 14 fitted between the said bridge 13.1 and the said fixed plate 11, and a lower ring 18 fitted between the said bridge 13.1 and the said assembly disc 15, thus allowing free relative rotation of the swivel 13 with respect to the said fixed plate 11 and to the said assembly disc 15 around the pivot 12.

The manner in which the device 10 works will be immediately obvious and further description of this will therefore be omitted.

The antifriction rings 15 and 18 are made of plastic such as polyamide, with the addition of an antifriction material such as molybdenum disulphide.

The remaining parts of the device 10 are made e.g. of polyoxymethylene.

Even under a heavy load, the device 10 runs and swivels at least as well as conventional devices but at significantly lower costs.

In addition, the device 10 is not subject to oxidation (rust) and therefore requires no treatment such as coating and/or galvanizing.

As an alternative, the antifriction ring means 14 and/or 18 may also be fitted between a fixed plate, a rotating swivel and an assembly disc, all made from sheet metal.

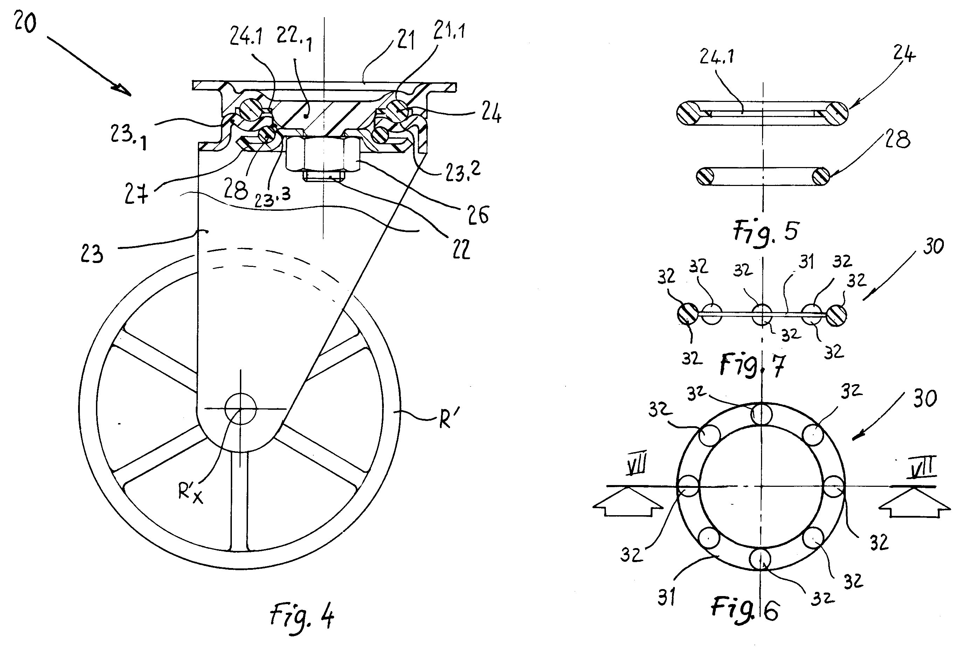

In the embodiment shown in Figures 4 and 5, the device according to the invention is indicated by the general reference 20.

The said device 20 comprises a plate 21, made of plastic and from which extends an integral threaded pivot 22 of essentially vertical axis. The said plate 21 contains through holes (not shown) for screws for attaching the device 20 to the underside of a heavy object that must be moved.

A plastic forked swivel 23 rotates on the said vertical pivot 22 and supports a wheel R' mounted idly with respect to a horizontal axis R'x.

The said rotating swivel 23 includes an intermediate bridge 23.1 containing a hole for the free passage of the said pivot 22, the top face of this bridge facing the lower face of the plate 21.

Formed in the said lower face of the plate 21 and in the said top face of the bridge 23.1 are respective opposing tracks 21.1 and 23.2 coaxial with respect to the pivot 22 with a first antifriction ring means 24 between them to reduce the friction between the said parts 21 and 23.

It should be observed that at the base of the pivot 22 is a radial enlargement 22.1 projecting from the lower face of the plate 21 and partly housed in a corresponding hole 23.3 in the bridge 23.1.

The said radial enlargement 22.1 provides a means of axially centring the said antifriction ring means 24, the latter comprising a corresponding inner centring annulus 24.1 (Fig. 5) which sits around the exterior of that part of the said radial enlargement 22.1 which is not housed in the hole 23.3.

A threaded nut 26, optionally of plastic, is screwed onto the threaded pivot 22 and, via a washer 27, also optionally of plastic and coaxial with the pivot 22, provides the rotary connection between the plate 21 and the swivel 23 about the axis of the pivot 22.

In order further to reduce friction, a further antifriction ring means 28 coaxial with the pivot 22 is interposed between the top face of the said washer 27 and the lower face of the bridge 23.1 of the rotating swivel 23. For this purpose the said opposing faces of the washer 27 and bridge 23.1 also contain respective tracks coaxial with the pivot 22 for the partial housing of the said antifriction ring 28.

The manner in which the device 20 works will also be immediately obvious and will not therefore be further described.

The antifriction rings 24 and 28 are made of plastic, such as polyamide, with the addition of an antifriction material such as molybdenum disulphide.

The remaining parts of the device 20 are made e.g. of polyoxymethylene.

The device 20 has the same advantages as those enumerated earlier with reference to the device 10.

Figures 6 and 7 illustrate an alternative embodiment of an antifriction ring means, this time under the reference 30.

The said antifriction ring 30 comprises an essentially annular flat body 31, from whose plane faces individual integral hemispherical bosses 32 extend to provide contact with the opposing faces, e.g. of the plate 21 and the bridge 23.1. This reduces the area of friction between the antifriction ring 30, the plate 21 and the rotating swivel 23 and so makes the device 20 more efficient.

As an alternative, in place of one of the said antifriction ring means 24 or 28, the device 20 is provided with an arrangement of balls, optionally of plastic, rolling in opposing races formed in the plate and the rotating swivel or in the rotating swivel and the washer.

## Claims

1. Caster device for moving heavy objects that includes a plate which is fixed to the underside of the object to be moved and carries a threaded pivot of essentially vertical axis on which there rotates a forked swivel supporting a wheel mounted idly with respect to an essentially horizontal axis, while a threaded nut screwed onto the threaded pivot forms with an intermediate washer the rotary connection between the parts, and in which the rotary swivel comprises a bridge essentially parallel to the plate, characterized in that an antifriction ring means (14, 18; 24, 28; 30) is interposed between the said plate (11, 21) and the said forked swivel (13, 23) and/or between the said forked swivel (13, 23) and the said washer (17, 27) so as to allow free relative rotation of the swivel with respect to the said plate and/or to the said washer about the said pivot.

2. Caster device according to Claim 1, characterized in that the said bridge (13.1) is sandwiched between two antifriction rings, an upper ring (14) fitted between the said bridge (13.1) and the said plate (11), and a lower ring (18) fitted between the said bridge (13.1) and an assembly disc (15), the latter being placed on top of the said washer (17), thus allowing free relative rotation of the swivel (13) with respect to the said plate (11) and to the said assembly disc (15) around the pivot (12).

3. Caster device according to Claim 2, characterized in that an annular seat (11.3) coaxial with respect to the said pivot (12) is provided on the lower face of the said plate (11) and bound on the inside by an axial collar (11.4) that extends down through a corresponding hole (13.2) in the said bridge (13.1) and is itself axially traversed by the said pivot (12).

4. Caster device according to Claim 3, characterized in that a circumferential outer rim (11.5) bounds the said annular seat (11.3) by way of a dust guard.

5. Caster device according to Claim 2, characterized in that that face of the said-bridge (13.1) against which the said upper antifriction ring (14) bears contains, underneath this ring, an annular groove (13.3) coaxial with respect to the said pivot (12), to reduce the area of friction between these parts.

6. Caster device according to Claim 3, characterized in that the said assembly disc (15) is fitted coaxially onto the free end of the said pivot (12) and bears from beneath, via an axial projection (15.1) with which it is provided - and through which the said pivot (12) passes axially-against the said axial collar (11.4) of the plate (11), the said annular disc (15) being squeezed in this position against the said axial collar (11.4) by the said threaded nut (16), which is screwed onto the said free end of the pivot (12).

7. Caster device according to Claim 1, characterized in that the said antifriction ring means (14, 18; 24, 28; 30) is made of plastic such as polyamide, with the addition of an antifriction material such as molybdenum disulphide.

8. Caster device according to Claim 1, characterized in that the said plate (11, 21), the said rotary swivel (13, 23) and/or the said washer (17, 27) are made of plastic, e.g. polyoxymethylene.

9. Caster device according to Claim 1, characterized in that formed in the said plate (21) and in the said bridge (23.1) are respective opposing tracks (21.1, 23.2) coaxial with respect to the pivot (22), with an antifriction ring means (24, 30) between them, so as to reduce the friction between the said parts (21, 23).

10. Caster device according to Claim 9, characterized in that the said antifriction ring means (30) comprises an essentially annular body (31) from which integral bosses (32), which may be hemispherical, arranged in contact with the opposing friction surfaces, project.

11. Caster device according to any one of the preceding claims, characterized in that at the base of the said pivot (22) is a radial enlargement (22.1) projecting from the plate (21) and partly housed in a corresponding seat (23.3) in the bridge (23.1), in such a way as to provide a means of axially centring the said antifriction ring means (24), the latter comprising a corresponding inner centring annulus (24.1) which sits on that part of the said radial enlargement which is not housed in the said seat.

12. Caster device according to Claim 1, characterized in that between the said forked swivel and the said washer or between the said plate and the said forked swivel is an arrangement of balls or rollers made of plastic, such as polyamide, with the addition of an antifriction material, such as molybdenum disulphide, to form a rolling-contact bearing.
